# EUROPÄISCHE PATENTSCHRIFT

(11) **EP 3 539 932 B1**
(45) Veröffentlichungstag und Bekanntmachung des Hinweises auf die Patenterteilung: **07.12.2022**
(21) Anmeldenummer: 19163074.8
(22) Anmeldetag: 15.03.2019
(51) Int. Cl.: C02F 11/15, C02F 11/121, C02F 11/14

(54) **VERFAHREN ZUR OPTIMIERUNG DER ENTWÄSSERUNG VON SCHLAMM AUS EINEM BIOLOGISCHEM REINIGUNGSPROZESS**
METHOD FOR OPTIMIZING THE DEWATERING OF SLUDGE FROM A BIOLOGICAL PURIFICATION PROCESS
PROCÉDÉ D'OPTIMISATION DE LA DÉSHYDRATATION DE BOUE D'UN PROCÉDÉ D'ÉPURATION BIOLOGIQUE

(30) Priorität: 16.03.2018 AT 502232018
(43) Veröffentlichungstag der Anmeldung: 18.09.2019
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- CN-A- 106 430 878
- US-A1- 2016 145 133
- HUAN L ET AL: "Effects of ultrasonic disintegration on sludge microbial activity and dewaterability", JOURNAL OF HAZARDOUS MATERIALS, ELSEVIER, AMSTERDAM, NL, Bd. 161, Nr. 2-3, 30. Januar 2009 (2009-01-30), Seiten 1421-1426, XP025681983, ISSN: 0304-3894, DOI: 10.1016/J.JHAZMAT.2008.04.113 [gefunden am 2008-05-03]

## Beschreibung

Die Erfindung bezieht sich auf ein Verfahren zur Optimierung der Entwässerung von Schlamm aus einem biologischen Reinigungsprozess, insbesondere aus der Abwasseraufbereitung, wobei der Schlamm einer Entwässerungsvorrichtung zugeführt wird.

Kommunale Abwässer werden beispielsweise mittels Belebungsverfahren gereinigt, wobei verschmutztes Wasser mit Hilfe von Bakterien gereinigt wird. Zusätzlich werden chemische Fällmittel eingesetzt um den Phosphatgehalt zu reduzieren. Anschließend wird das gereinigt Abwasser abgeleitet und der zurückbleibende Schlamm einer separaten Behandlung zugeführt. Nach dieser Behandlung bleibt Schlamm zur Entsorgung oder Verwertung übrig. Um den zur Entsorgung anstehenden Schlamm weitgehend von Wasser zu befreien werden Flockungshilfsmittel aus Polymer oder dgl. zugegeben, und einem Entwässerungsaggregat zugeführt. Zur Entwässerung werden Entwässerungsvorrichtungen, beispielsweise Schneckenpressen, verwendet. Der entwässerte Schlamm soll einen möglichst geringen Flüssigkeitsanteil aufweisen. Allerdings hat sich gezeigt, dass gerade im Hinblick auf das erzielbare Entwässerungsergebnis Verbesserungsbedarf besteht.

Ein generelles Problem in der Klärschlammentwässerung besteht in der Reproduzierbarkeit dauerhaft guter Ergebnisse. Ein bestehendes Entwässerungsaggregat kann mit den andauernd wechselnden Schlammeigenschaften (Belastungsänderungen, jahreszeitlicher Wechsel, verfahrenstechnische Veränderungen, usw.) nicht immer gleich gute Entwässerungsergebnisse erreichen. Bislang kann nur durch eine permanente manuelle Betreuung (Durchflussmenge, Aggregatseinstellung, Polymereinstellung usw.) ein kontinuierlich gutes Ergebnis erreicht werden. HUAN L ET AL: "Effects of ultrasonic disintegration on sludge microbial activity and dewaterability", JOURNAL OF HAZARDOUS MATERIALS, Bd. 161, Nr. 2-3, 30. Januar 2009, CN 106 430 878 und US 2016/145133 beziehen sich auf die Entwässerung von vorher mit Ultraschall beschalltem Schlamm.

Der Erfindung liegt somit die Aufgabe zugrunde, ein Verfahren zur Entwässerung von Schlamm anzugeben, mit dem ein kontinuierlich gutes Ergebnis erreicht und zudem das erzielbare Entwässerungsergebnis verbessert werden kann.

Die Erfindung ist in Anspruch 1 definiert.

Die Erfindung löst die gestellte Aufgabe dadurch, dass der Schlamm bevor er der Entwässerungsvorrichtung zugeführt und entwässert wird mit Ultraschall beschallt wird, um die Schlammstruktur derart zu verändern, dass ein besserer Ladungsausgleich zwischen dem Schlamm und wenigstens einem Konditionierungsmittel geschaffen wird, wovor oder wobei dem Schlamm das Schlammkonditionierungsmittel zudosiert wird.

Damit ergibt sich eine definierte Veränderung der Schlammstruktur zur Entwässerungsverbesserung. Mit dem erfindungsgemäßen Beschallen des Schlammes mit Ultraschall wird die Flockenoberfläche derart vorbereitet, dass das zudosierte Schlammkonditionierungsmittel, insbesondere ein Polymer, durch verbesserten Ladungsausgleich besser am Schlamm angreifen und wirken kann.

Schlammkonditionierungsmittel kann dem Schlamm bereits vor oder während der Beschallung mit Ultraschall zugegeben werden.

Der zu entwässernde Schlamm wird wenn diesem das Schlammkonditionierungsmittel, in der Regel ein Polymer, zudosiert wird und der Schlamm der Entwässerungsvorrichtung zugeleitet wird, mit Ultraschall vorbehandelt. Dabei ist der Energieeintrag derart zu wählen, dass die Ultraschalleinwirkung keine Zellzerstörung bewirkt. Es wird lediglich so viel Energie eingetragen, dass sich die Schlammstruktur bzw. auch die Schlammoberfläche verändert und in weiterer Folge das Schlammkonditionierungsmittel idealisierte Voraussetzungen vorfindet, um seine volle Wirkung für den Ladungsausgleich entfalten zu können.

Der Schlamm wird mit wenigstens einer Frequenz zwischen 20 und 100kHz, insbesondere mit einer Frequenz von 25kHz, und mit einer spezifischen Leistung von 1 bis 1000 W/kg im Schlamm enthaltenem Feststoff beschallt.

Vorteilhaft ist es dem Schlamm 0,1 bis 100 kg Wirkstoff des Schlammkonditionierungsmittels je 1000kg im Schlamm enthaltenem Feststoff zu dosiert wird. Der Wirkstoff des Schlammkonditionierungsmittels kann beispielsweise Polyacrylamid als Feststoff oder flüssig als Lösung aufbereitet sein. Das Schlammkonditionierungsmittel kann auch mehrere Konditionierungsmittel umfassen, beispielsweise Mittel zur Phosphat- bzw. Magnesiumammoniumphosphat-Fällung.

Durch die erfindungsgemäße Vorbehandlung des zu entwässernden Schlammes werden ideale und annähernd gleichbleibende Bedingungen für die Entwässerungsvorrichtung geschaffen. Die aktive Oberfläche im Schlamm wird verändert, womit sich das Konditionierungsmittel besser an den Schlamm anbinden, bzw. die Schlammsuspension besser durchdringen kann, und mitunter scherstabilere Schlammflocken bilden. Dies führt zu einem verbesserten Entwässerungsergebnis.

Der gesamte zu entwässernde Schlamm wird im Voll- oder Teilstrom durch den Ultraschall derart verändert, dass trotz unterschiedlichster Rahmenbedingungen in der Schlammstruktur annähernd gleichbleibende Bedingungen für die Entwässerungsvorrichtung geschaffen werden und somit immer ein optimales Ergebnis erreicht werden kann. Mit der vorgeschlagenen Optimierung kann das Entwässerungsergebnis von Klärschlamm um bis zu 20% verbessert werden, (beispielsweise von 20 % auf 24 % Feststoffaustrag). Zusätzlich kann durch das Herstellen definierter Bedingungen das Polymer zur Konditionierung optimal eingestellt, und somit eine Überdosierung vermieden werden.

Eine Vorrichtung zur Optimierung der Entwässerung von Schlamm aus einem biologischen Reinigungsprozess, insbesondere aus der Abwasseraufbereitung, umfasst eine Entwässerungsvorrichtung. Vor der Entwässerungsvorrichtung ist eine den Schlamm beschallende Ultraschallanlage angeordnet.

Der Ultraschallanlage ist eine Dosiereinrichtung zum Zudosieren eines Schlammkonditionierungsmittels zum Schlamm vor- und/oder zugeordnet.

Durch die Vorbehandlung mit Ultraschall kann das zugeführte Schlammkonditionierungsmittel einen besseren Ladungsausgleich erzielen, womit sich scherstabilere Schlammflocken bilden, die sich in weiterer Folge besser entwässern lassen.

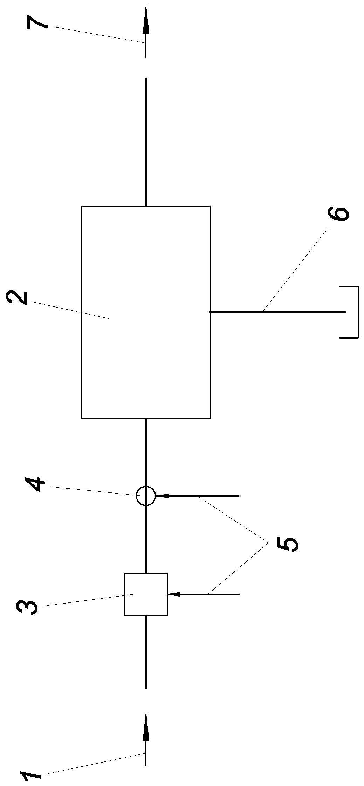

In der Zeichnung ist einer nicht erfindungsgemäß Gegenstand beispielsweise dargestellt, der lediglich der Veranschaulichung dient.

Eine Vorrichtung zur Entwässerung von Schlamm 1 aus einem biologischen Reinigungsprozess umfasst eine Entwässerungsvorrichtung 2, der zur Optimierung der Entwässerung eine den Schlamm 1 beschallende Ultraschallanlage 3 vorgeordnet ist. Der Ultraschallanlage 3 ist eine Dosiereinrichtung 4 zum Zudosieren eines Schlammkonditionierungsmittels 5 zum Schlamm 1 zu- und/oder nachgeordnet. In der Entwässerungsvorrichtung 2 wird der derart vorbehandelte Schlamm 1 entwässert und die flüssige Phase 6 von der feste Phase 7 des Schlammes 1 getrennt.

## Patentansprüche

1. Verfahren zur Optimierung der Entwässerung von Schlamm aus einem biologischen Reinigungsprozess, insbesondere aus der Abwasseraufbereitung, welcher einer Entwässerungsvorrichtung zugeführt wird, wobei der Schlamm bevor er der Entwässerungsvorrichtung zugeführt und entwässert wird mit Ultraschall mit wenigstens einer Frequenz zwischen 20 und 100kHz, insbesondere mit einer Frequenz von 25kHz, und mit einer spezifischen Leistung von 1 bis 1000 W/kg im Schlamm enthaltenem Feststoff beschallt wird, um die Schlammstruktur derart zellzerstörungsfrei zu verändern, dass ein verbesserter Ladungsausgleich zwischen dem Schlamm und einem Schlammkonditionierungsmittel geschaffen wird, wovor, oder wobei dem Schlamm wenigstens ein Schlammkonditionierungsmittel zudosiert wird.

2. Verfahren nach Anspruch 1, wobei dem Schlamm 0,1 bis 100 kg Wirkstoff des Schlammkonditionierungsmittels je 1000kg im Schlamm enthaltenem Feststoff zudosiert wird.

## Claims

1. Method for optimising the dewatering of sludge from a biological purification process, in particular from waste water treatment, which sludge is supplied to a dewatering apparatus, wherein, before the sludge is supplied to the dewatering apparatus and dewatered, it is treated with ultrasound having at least a frequency of between 20 and 100 kHz, in particular having a frequency of 25 kHz, and a specific power of 1 to 1000 W/kg of solids contained in the sludge in order to change the sludge structure without cell destruction in such a way that an improved charge equalisation between the sludge and a sludge conditioning agent is created, before or during which at least one sludge conditioning agent is added to the sludge.

2. Method as claimed in claim 1, wherein 0.1 to 100 kg of active substance of the sludge conditioning agent per 1000 kg of solids contained in the sludge is added to the sludge.

## Revendications

1. Procédé d'optimisation de la déshydratation de boues issues d'un processus d'épuration biologique, en particulier du traitement des eaux usées, qui sont acheminées vers un dispositif de déshydratation, la boue étant soumise, avant d'être acheminée vers le dispositif de déshydratation et déshydratée, à des ultrasons d'au moins une fréquence comprise entre 20 et 100 kHz, en particulier d'une fréquence de 25 kHz, et avec une puissance spécifique de 1 à 1000 W/kg de matière solide contenue dans la boue, afin de modifier la structure de la boue sans destruction cellulaire de manière à créer un meilleur équilibre de charge entre la boue et un agent de conditionnement de la boue, avant ou après avoir ajouté à la boue au moins un agent de conditionnement de la boue.

2. Procédé selon la revendication 1, dans lequel on ajoute à la boue de 0,1 à 100 kg de matière active de l'agent de conditionnement de la boue pour 1000 kg de matière solide contenue dans la boue.
